**Europäisches Patentamt**

**European Patent Office**

**Office européen des brevets**

(19)

(11) Veröffentlichungsnummer: **0 210 127**
**B1**

(12) # EUROPÄISCHE PATENTSCHRIFT

(45) Veröffentlichungstag der Patentschrift:
**07.12.88**

(51) Int. Cl.⁴: **F 16 B 13/06**

(21) Anmeldenummer: **86810258.3**

(22) Anmeldetag: **10.06.86**

(54) Spreizanker.

(30) Priorität: **22.07.85 DE 3526094**

(43) Veröffentlichungstag der Anmeldung:
**28.01.87 Patentblatt 87/5**

(45) Bekanntmachung des Hinweises auf die Patenterteilung:
**07.12.88 Patentblatt 88/49**

(84) Benannte Vertragsstaaten:
**AT CH DE FR GB LI**

(56) Entgegenhaltungen:
**DE-A- 3 312 141**
**FR-A- 2 307 171**
**US-A- 3 403 594**

(73) Patentinhaber: **HILTI Aktiengesellschaft,**
**FL-9494 Schaan (LI)**

(72) Erfinder: **Bergner, Arndt, Haderunstrasse 29,**
**D-8000 München 70 (DE)**

(74) Vertreter: **Wildi, Roland, Hilti Aktiengesellschaft**
**Patentabteilung, FL-9494 Schaan (LI)**

**Beschreibung**

Die Erfindung betrifft einen Spreizanker zum Einsatz in eine Erweiterung aufweisenden Bohrlöchern, mit einer Gewindeankerstange, in die Erweiterung radial auslenkbaren Verriegelungskörpern, einem Kopfteil zur axialen Abstützung der Verriegelungskörper am setzrichtungsseitigen Ende der Gewindeankerstange und mit einer auf der Gewindeankerstange verschiebbar angeordneten Kegelhülse zum Auslenken der Verriegelungskörper über ein an der Gewindeankerstange angeordnetes Widerlager, wobei in radialer Richtung die Aussenkontur des Widerlagers innerhalb der Axialprojektion der Kegelhülse liegt.

Bei einem aus der DE-A1-2 758 091 bekannten Spreizanker wird zum Auslenken von Verriegelungskörpern in eine Erweiterung von Bohrlöchern eine Kegelhülse entlang einer Gewindeankerstange in Setzrichtung verschoben. Die Kegelhülse läuft dabei mit der kegeligen Zone in einen zwischen den Verriegelungskörpern und der Gewindeankerstange bestehenden Spalt ein.

Das Verschieben der Kegelhülse wird durch ein Widerlager erreicht, das sich aus einer auf die Gewindeankerstange aufgeschraubten Spannmutter und einer Unterlegscheibe zwischen Spannmutter und Kegelhülse zusammensetzt. Das Widerlager dient gleichzeitig auch dem Festspannen der zu befestigenden Gegenstände am Untergrund.

Ein erheblicher Nachteil dieses Spreizankers besteht darin, dass die axiale Anordnung der Erweiterung die Lage des Widerlagers bestimmt. Die richtige axiale Anordnung der Erweiterung ist daher auf die Dicke der zu befestigenden Gegenstände auszurichten, d.h. bei unterschiedlichen Dicken muss die Erweiterung axial auch unterschiedlich positioniert sein.

Ein Spreizanker mit von einer Kegelhülse auslenkbaren Verriegelungskörpern, wobei die Kegelhülse von einem mit einer Gewindeankerstange fest verbundenen Widerlager in Setzrichtung verschoben wird, ist aus der US-A-3 403 594 bekannt. Nachteilig ist bei diesem Anker, dass beim Spreizvorgang sich die Gewindeankerstange entsprechend dem zum Auslenken der Verriegelungskörper erforderlichen Verschiebeweg der Kegelhülse in das Bohrloch hinein verschiebt, wobei dieser Verschiebeweg abhängig von der Grösse der Erweiterung ist. Der Überstand der Gewindeankerstange aus dem Untergrund wird also während des Spreizvorganges um ein nicht vorbestimmtes Mass verkürzt, so dass die Gewindeankerstange entweder störend weit oder für das Festlegen einer Mutter zu wenig weit aus dem Untergrund ragt.

Der Erfindung liegt die Aufgabe zugrunde, einen Spreizanker mit in eine Erweiterung auslenkbaren Verriegelungskörpern zu schaffen, der ein weitgehend von der axialen Anordnung der Erweiterung unabhängiges Befestigen von Gegenständen am Untergrund ermöglicht.

Erfindungsgemäss wird die Aufgabe bei einem eingangs dargelegten Spreizanker durch die kennzeichnenden Merkmale des Patentanspruches 1 gelöst.

Die Erfindungsgemässe Ausbildung des Spreizankers erlaubt das Einführen in Bohrlöcher durch Bohrungen der zu befestigenden Gegenstände hindurch, wobei das entgegen der Setzrichtung weisende Ende der Kegelhülse die Oberseite der zu befestigenden Gegenstände überragen kann. Beim Verankerungsvorgang verschieben sich Kegelhülse und Widerlager weiter in Setzrichtung und gelangen in versenkte Position. Je nach axialer Anordnung der Erweiterung schwankt das Ausmass der Versenkung. In jedem Falle aber wird eine gute Verankerung durch vollständigen Eingriff der Verriegelungskörper in die Erweiterung erzielt.

Für den Verankerungsvorgang greift zum weiteren Aufschrauben des Widerlagers an dessen stirnseitigen Angriffsmitteln ein entsprechendes Werkzeug an. Durch das Verschieben der Kegelhülse in Setzrichtung werden von dieser die Verriegelungskörper in die Erweiterung ausgelenkt. Auf die aus dem zu befestigenden Gegenstand ragende Gewindeankerstange wird zum Spannen gegen den Untergrund eine Mutter aufgeschraubt.

Das vollständige Auslenken der Verriegelungskörper kann dem Handhabenden auf einfache Weise angezeigt werden, indem die Gewindeankerstange eine Markierung trägt, die bei vollständig ausgelenkten Verriegelungskörpern von dem in Setzrichtung geschraubten Widerlager freigegeben wird.

Die erfindungsgemässe Ausbildung des Spreizankers schafft aber auch die vorteilhafte, an sich bekannte Möglichkeit, mittels eines vorgespannten Federelementes das selbsttätige Auslenken der Verriegelungskörper zu erreichen. Das Federelement stützt sich vorzugsweise in Setzrichtung an der Kegelhülse und entgegen der Setzrichtung direkt oder indirekt am Widerlager ab. Das Federelement kann aber auch zwischen Kopfteil und Verriegelungskörpern eingespannt sein.

Zum Verankern wird der Spreizanker mit vorgespanntem Federelement durch Bohrungen der zu befestigenden Gegenstände in die Bohrlöcher im Untergrund eingeführt, wobei die Verriegelungskörper bei Erreichen einer versenkten Position von Kegelhülse und Widerlager in die Zone der Erweiterung gelangen und vom Federelement in diese ausgelenkt werden. Dadurch entspannt sich das Federelement zumindest teilweise. Das Widerlager kann sodann in Setzrichtung weiter auf die Gewindeankerstange aufgeschraubt werden, wodurch das Federelement wieder gespannt und eine allfällige Markierung an der Gewindeankerstange zur Setzkontrolle freigegeben wird. Über die aus den zu befestigenden Gegenstände ragende Gewindeankerstange können mittels einer Mutter die Gegenstände gegen den Untergrund gespannt werden. Um ein Mitdrehen der Gewindeankerstange beim Aufschrauben der Widerlager und Mutter zu verhindern, können herkömmliche Drehsperren, die zwischen Gewindeankerstange und Bohrlöchern wirken, vorgesehen sein.

Als vorteilhaft erweist es sich, wenn das Widerlager sich an der Stirnseite der Kegelhülse abstützt. Gegebenenfalls kann dies unter Zwischenlage des Federelementes erfolgen. Zweckmässig ist das Widerlager im wesentlichen als Hülse oder Ring ausgebildet.

Das Widerlager stützt sich vorzugsweise am Grund einer Ausnehmung in der dem Kegel abgewandten Stirnseite der Kegelhülse ab, wobei die lichte Weite der Ausnehmung in radialer Richtung zumindest der grössten radialen Erstreckung des Widerlagers entspricht. Das Widerlager kann so in der Kegelhülse versenkt werden. Diese Ausbildung ermöglicht bei insgesamt kurzer Baulänge der Kegelhülse und damit des in die Bohrlöcher einragenden Abschnittes des Spreizankers eine lange Querabstützung sowohl in den Bohrlöchern als auch in der Bohrung der zu befestigenden Gegenstände. Die Kegelhülse kann damit bis zur Oberseite der zu befestigenden Gegenstände Abstützfunktion erfüllen.

Die Angriffsmittel an der freien Stirnseite des Widerlagers sind mit Vorteil als einander diametral gegenüberliegende Axialbohrungen ausgebildet. Zweckmässigerweise sind zwei Axialbohrungen vorgesehen. Da das Drehmoment zur Betätigung des Widerlagers in dieses stirnseitig eingeleitet wird, weist dessen Aussenkontur in der Axialprojektion einfachheitshalber z.B. Kreisform auf.

Die Erfindung wird nachstehend anhand von Zeichnungen, die Ausführungsbeispiele von Spreizankern und eines Werkzeugs zum Spannen der Spreizanker wiedergeben, näher erläutert. Es zeigen:

Fig. 1 einen Spreizanker in ungespreizter Stellung, mit Werkzeug, im Längsschnitt;

Fig. 2 den Spreizanker nach Fig. 1 in gespreizter Stellung, mit Werkzeug, im Längsschnitt;

Fig. 3 den Spreizanker nach Fig. 1 und 2 im Befestigungseinsatz, im Längsschnitt;

Fig. 4 eine zweite Ausführungsform eines Spreizankers in ungespreizter Stellung, im Längsschnitt.

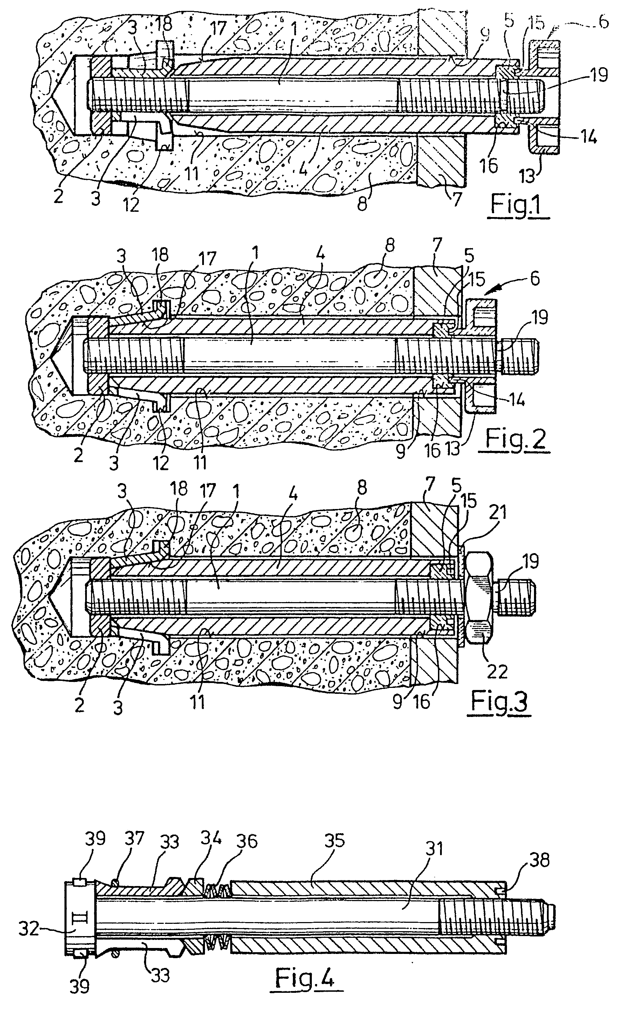

Der in Fig. 1 gezeigte Spreizanker besteht im wesentlichen aus einer Gewindeankerstange 1, einem an setzrichtungsseitigen Ende der Gewindeankerstange 1 sitzenden Kopfteil 2, sich am Kopfteil 2 abstützenden Verriegelungskörpern 3, einer Kegelhülse 4 und einem mutterartigen Widerlager 5. Zum Anziehen des Widerlagers 5 wird in dieses mittels eines insgesamt mit 6 bezeichneten Werkzeugs ein Drehmoment eingeleitet.

Der Spreizanker dient dem Festlegen eines zu befestigenden plattenförmigen Gegenstandes 7 an einem Untergrund 8. Hierzu wird der Spreizanker durch eine Bohrung 9 im Gegenstand 7 in ein Bohrloch 11 im Untergrund 8 eingeführt. Das Bohrloch 11 weist eine umlaufende Erweiterung 12 auf.

Zur Erzielung der Verankerung wird an einem scheibenförmigen Träger 13 des Werkzeugs 6 händisch ein Drehmoment aufgebracht. Mitnahmestifte 14 am Träger 13 ragen in einander diametral gegenüberliegende Axialbohrungen 15 in der freien Stirnseite des Widerlagers 5 ein, so dass das Drehmoment auf das Widerlager übertragen wird. Zur versenkten Aufnahme des Widerlagers 5 ist die Kegelhülse 4 mit einer Ausnehmung 16 versehen. Am Grund der Ausnehmung 16 stützt sich das Widerlager 5 axial ab, so dass beim Aufschrauben des Widerlagers 5 in Setzrichtung die Kegelhülse 4 gegenüber der Gewindeankerstange 1 mitverschoben wird. Eine setzrichtungsseitige, gestuft kegelige Zone 17 der Kegelhülse 4 läuft dabei innenseitig an den schalenartig die Gewindeankerstange 1 teilweise umgebenden Verriegelungskörpern 3 auf und lenkt diese radial aus. Radial abragende Finger 18 der Verriegelungskörper 3 treten so in die Erweiterung 12 ein und werden von der Zone 17 in dieser ausgelenkten Position gehalten, wie dies der Fig. 2 zu entnehmen ist. Die Kegelhülse 4 und das Widerlager 5 überstehen nun die Oberseite des Gegenstandes 7 nicht mehr.

Bei Erlangung dieser Verankerungsposition ist eine ringförmige Markierung 19 an der Gewindeankerstange 1 entgegen der Setzrichtung über das Werkzeug 6 hinausgetreten (Fig. 2), wodurch dem Handhabenden angezeigt wird, dass die Verriegelungskörper 3 ordnungsgemäss in die Erweiterung 12 eingerückt sind.

Das Werkzeug 6 wird anschliessend entnommen und mittels einer Beilagscheibe 21 und einer Mutter 22 wird der Gegenstand 7 sodann gegen den Untergrund 8 gespannt, wie dies der Fig. 3 entnehmbar ist.

Der Spreizanker nach Fig. 4 besteht wiederum aus einer Gewindeankerstange 31 mit einem an diese angeformten Kopfteil 32, radial auslenkbaren Verriegelungskörpern 33, einer ringförmigen Kegelhülse 34 und einem hülsenförmigen Widerlager 35. Das Widerlager 35 wirkt über ein aus Tellerfedern bestehendes Federelement 36 in Setzrichtung auf die Kegelhülse 34 ein.

Für den Verwendungseinsatz wird der Spreizanker in der hier gezeigten ungespreizten Stellung in ein Bohrloch eines Untergrundes eingeführt. Die Vorspannung des Federelementes 36 bewirkt ein Vortreiben der Kegelhülse 34 zwischen die Verriegelungskörper 33, sobald diese beim Einführen in den Bereich einer Erweiterung des Bohrloches gelangen und folglich radial ausweichen können. Auch beim radialen Auslenken der Verriegelungskörper 33 werden diese von einem federnden Haltering 37 konzentrisch auf der Gewindeankerstange 31 gehalten. Durch anschliessendes Drehen des mit der Gewindeankerstange 31 verschraubten Widerlagers 35 im Aufschraubsinne läuft das Widerlager unter abermaligem Spannen des Federelementes 36 gegen die Kegelhülse 34, die somit in sicherem Spreizeingriff zwischen den Verriegelungskörpern 33 verbleibt.

Das Drehen des Widerlagers 35 erfolgt durch ein in Fig. 1 gezeigtes Werkzeug, das in Axialbohrungen 38 des Widerlagers 35 in Eingriff gebracht wird. Um beim Drehen des Widerlagers 35 ein Mitdrehen der Gewindeankerstange 31 zu unterbinden, sind am Kopfteil 32 nasenförmige Vorsprünge 39 vorgesehen, die sich reibschlüssig an der Wandung des Bohrloches anlegen.

Im weiteren trifft auch für diesen Spreizanker die voran beschriebene Funktionsweise des Spreizankers den Fig. 1 bis 3 zu.

**Patentansprüche**

1. Spreizanker zum Einsatz in eine Erweiterung aufweisenden Bohrlöchern (11), mit einer Gewindeankerstange (1, 31), in die Erweiterung radial auslenkbaren Verriegelungskörpern (3, 33), einem Kopfteil (2, 32) zur axialen Abstützung der Verriegelungskörper (3, 33) am setzrichtungsseitigen Ende der Gewindeankerstange (1, 31) und mit einer auf der Gewindeankerstange (1, 31) verschiebbar angeordneten Kegelhülse (4, 34) zum Auslenken der Verriegelungskörper (3, 33) über ein an der Gewindeankerstange (1, 31) angeordnetes Widerlager (5, 35), wobei in radialer Richtung die Aussenkontur des Widerlagers (5, 35) innerhalb der Axialprojektion der Kegelhülse (4, 34) liegt, dadurch gekennzeichnet, dass die Verbindung zwischen Gewindeankerstange (1, 31) und Widerlager (5, 35) als, dem Verschieben der Kegelhülse (4, 34) gegenüber der Gewindeankerstange (1, 31) dienende Gewindeverbindung ausgebildet und das Widerlager (5, 35) an der freien Stirnseite Angriffsmittel (15, 38) für dem Aufbringen eines Drehmomentes dienende Werkzeuge (6) aufweist.

2. Spreizanker nach Anspruch 1, dadurch gekennzeichnet, dass das Widerlager (5, 35) sich an der Stirnseite der Kegelhülse (4, 34) abstützt.

3. Spreizanker nach Anspruch 2, dadurch gekennzeichnet, dass das Widerlager (5) sich am Grund einer Ausnehmung (16) in der dem Kegel abgewandten Stirnseite der Kegelhülse (4) abstützt, wobei die lichte Weite der Ausnehmung (16) in radialer Richtung zumindest der grössten radialen Erstreckung des Widerlagers (5) entspricht.

4. Spreizanker nach Anspruch 2 oder 3, dadurch gekennzeichnet, dass die Angriffsmittel an der freien Stirnseite des Widerlagers (5, 35) als einander diametral gegenüberliegende Axialbohrungen (15, 38) ausgebildet sind.

## Claims

1. An expansible anchor for use in drill-holes (11) which have a widening, with a threaded anchor rod (1, 31) locking bodies (3, 33) which are radially deflectable into the widening, a head part (2, 32) for the axial support of the locking bodies (3, 33) on the end of the threaded anchor rod (1, 31) on the setting direction side, and with a taper sleeve (4, 34) for deflecting the locking bodies (3, 33) arranged on the threaded anchor rod (1, 31) displaceably by way of an abutment (5, 35) arranged on the threaded anchor rod (1, 31), in which respect in the radial direction the outer contour of the abutment (5, 35) lies within the axial projection of the taper sleeve (4, 34) characterised in that the connection between the threaded anchor rod (1, 31) and the abutment (5, 35) is designed as a threaded connection serving for the displacement of the taper sleeve (4, 34) relative to the threaded anchor rod (1, 31) and the abutment (5, 35) has at the free end face application means (15, 38) for tools (6) serving for the application of a torque.

2. An expansible anchor according to claim 1, characterised in that the abutment (5, 35) is supported on the end face of the taper sleeve (4, 34).

3. An expansible anchor according to claim 2, characterised in that the abutment (5) is supported on the bottom of a recess (16) in the end face, remote from the cone, of the taper sleeve (4), in which respect the clear width of the recess (16) in the radial direction corresponds at least to the greatest radial extent of the abutment (5).

4. An expansible anchor according to claim 2 or 3, characterised in that the attack means at the free end face of the abutment (5, 35) are designed as mutually diametrically opposed axial bores (15, 38).

## Revendications

1. Cheville à expansion pour la mise en place dans des perçages (11) présentant un élargissement, avec une barre d'ancrage filetée (1, 31), des organes de verrouillage (3, 33) pouvant être écartés radialement dans l'élargissement, une section de tête (2, 32) pour l'appui axial des organes de verrouillage (3, 33) à l'extrémité de la barre d'ancrage filetée (1, 31) dirigée dans le sens de l'enfoncement, et avec une douille conique (4, 34) disposée de manière mobile sur la barre d'ancrage filetée (1, 31) et servant à l'écartement des organes de verrouillage (3, 33) par l'intermédiaire d'une butée (5, 35) placée sur la barre d'ancrage filetée (1, 31), le contour extérieur de la butée (5, 35) se situant, dans le sens radial, à l'intérieur de la projection axiale de la douille conique (4, 34), caractérisée en ce que la liaison entre la barre d'ancrage filetée (1, 31) et la butée (5, 35) est réalisée sous la forme d'un assemblage à vis destiné au déplacement de la douille conique (4, 34) par rapport à la barre d'ancrage filetée (1, 31), et que la butée (5, 35) présente à la face frontale libre des moyens d'attaque (15, 38) pour des outils (6) servant à l'application d'un couple de rotation.

2. Cheville à expansion selon la revendication 1, caractérisée en ce que la butée (5, 35) prend appui sur la face frontale de la douille conique (4, 34).

3. Cheville à expansion selon la revendication 2, caractérisée en ce que la butée (5) prend appui sur le fond d'un évidement (16) dans la face frontale de la douille conique (4) opposée au cône, le diamètre intérieur de l'évidement (16) correspondant au moins, dans le sens radial, à la plus grande extension radiale de la butée (5).

4. Cheville à expansion selon l'une des revendications 2 ou 3, caractérisée en ce que les moyens d'attaque à la face frontale libre de la butée (5, 35) sont réalisés sous la forme d'alésages axiaux (15, 38) diamétralement opposés.

Fig.1

Fig.2

Fig.3

Fig.4